(19)

Europäisches
Patentamt
European
Patent Office
Office européen
des brevets

(11) **EP 4 468 650 A1**

(12) **EUROPEAN PATENT APPLICATION**
published in accordance with Art. 153(4) EPC

(43) Date of publication:
**27.11.2024 Bulletin 2024/48**

(21) Application number: **22920402.9**

(22) Date of filing: **14.10.2022**

(51) International Patent Classification (IPC):
***H04L 9/08*** (2006.01)    ***H04L 9/14*** (2006.01)

(52) Cooperative Patent Classification (CPC):
**H04L 9/08; H04L 9/14**

(86) International application number:
**PCT/JP2022/038483**

(87) International publication number:
**WO 2023/135879 (20.07.2023 Gazette 2023/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.01.2022 JP 2022004881**

(71) Applicant: **Hitachi, Ltd.**
**Tokyo 100-8280 (JP)**

(72) Inventors:
• **NAITO, Narumi**
**Tokyo 100-8280 (JP)**
• **TAKA, Hideyuki**
**Tokyo 100-8280 (JP)**
• **SATO, Keiichi**
**Tokyo 100-8280 (JP)**
• **ONODERA, Yu**
**Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(54) **COMPUTER SYSTEM AND KEY EXCHANGE METHOD**

(57)    A data management server manages a database storing confidential data, and stores public information and first secret information in a trust zone. A client terminal holds the public information and second secret information. The data management server generates a first public key by using the public information and the first secret information; and transmits the first public key. The client terminal generates the user secret key by using the public information, the second secret information, and the first public key; generates a second public key by using the public information and the second secret information; and transmits the second public key. The data management server generates the user secret key in the trust zone by using the public information, the first secret information, and the second public key; and generate, in the trust zone, key management data for managing the user secret key; and record the key management data.

FIG. 6

## Description

INCORPORATION BY REFERENCE

This application claims priority to Japanese Patent Application No. 2022-4881 filed on January 17, 2022, the content of which is incorporated herein by reference.

BACKGROUND OF THE INVENTION

This invention relates to a method of exchanging secret keys.

In recent years, cloud services have been used for the purpose of reducing system development costs and system operation and management costs, for example. In a cloud service, an organization managing a system which provides the cloud service is different from an organization which uses the system, and hence measures for preventing information leaks, investigating the cause of accidents that have occurred, and preventing recurrence, for example, become excessive. As a preventive measure against data leakage, one possible method is to utilize encryption technology to ensure the confidentiality of data in advance.

For example, in a case where a plurality of clients have the same key (common key) and use a common key encryption method which encrypts/decrypts data, there is an increased risk of information leakage as the number of clients (users) sharing the common key increases. Therefore, in a case where a shared key used for encrypted data held by a database is leaked, the encrypted data may be decrypted by a malicious third party.

In a case where the common key is leaked, in order to deal with the above-mentioned risk, it is required to promptly deal with the issue by, for example, generating a new common key and distributing the generated new common key to all clients again.

As a technology for solving the above-mentioned issues, the technology as described in JP 2018-97034 A is known. In JP 2018-97034 A, the following is described: "A data management server uses a master secret key to manage a database storing encrypted confidential data for management. A retrieval client holds a common secret key and a user secret key allocated to each user, and transmits a retrieval request including a confidential retrieval keyword for an output generated by using the common secret key and the user secret key in the case of receiving a retrieval instruction including a retrieval keyword. The data management server generates, when the user secret key is valid, a confidential retrieval keyword for management to retrieve confidential data for management by converting the confidential retrieval keyword for an output into a cryptogram using the master secret key, retrieves confidential data for management coincident with the confidential retrieval keyword for management, and uses the confidential data for management and the user secret key to generate confidential data for output."

In the invention as disclosed in JP 2018-97034 A, in a case where a user secret key is leaked, it suffices to take a measure such as updating or revoking the leaked user secret key, and it is not required to update the other user secret keys or the data stored in the database. Therefore, it is possible to rapidly take a measure against leakage of a secret key.

SUMMARY OF THE INVENTION

In the technology as disclosed in JP 2018-97034 A, security is ensured by not storing the common secret key, the user secret key, and the master secret key in the data management server which stores the confidential data, and managing only key management information, which is information relating to the user secret key.

In the use of a cloud service, in a case where the secret keys or the calculation formula and secret information for generating the keys are stored on an external server accessed by clients, there are a possibility of the secret keys being leaked by an attack on the server and a possibility of the secret keys being acquired by a privileged user, for example, a manager of a data center, and even if the data itself is encrypted, there are security issues because of the risk of information leakage. As a result, from a security viewpoint, key exchange that does not use an external server or communication path is required, for example, the generation and distribution of the master secret key and the user secret key are performed on the terminal of the manager on the user side, and the manager of each terminal distributes the master secret key and the user secret key face-to-face, or by means such as postal mail.

However, in a case where there are many users, a key exchange method like that mentioned above is inefficient and impractical.

It is an object of this invention to implement generation and distribution of a user secret key without storing secret keys even once in a zone that is accessible to a privileged user and while keeping the secret keys confidential in a communication path.

A representative example of the present invention disclosed in this specification is as follows: a computer system comprises a data management server, and a client terminal. The data management server includes an arithmetic device and a storage device. The data management server is configured to manage a database configured to store confidential data encrypted based on a probabilistic encryption method using a master secret key. The arithmetic device has a function for generating a trust zone which is secure and logically isolated in the storage device. The trust zone stores the master secret key as well as public information and first secret information to be used in a Diffie-Hellman key exchange protocol. The client terminal is configured to hold the public information and second secret information to be used in the Diffie-Hellman key exchange protocol. The data management server being configured to: generate, in a case where a request to generate a user secret key to be used to access the confidential data managed by the data management server is received from the client terminal, a first public key by using the public information and the first secret information; and transmit the first public key to the client terminal. The client terminal is configured to: generate the user secret key by using the public information, the second secret information, and the first public key; generate a second public key by using the public information and the second secret information; and transmit the second public key to the data management server. The data management server is configured to: store the second public key in the trust zone; generate the user secret key in the trust zone by using the public information, the first secret information, and the second public key; generate, in the trust zone, key management data for managing the user secret key; and record the key management data as information for use in comparison processing for determining whether the user secret key is valid.

According to this invention, it is possible to implement generation and distribution of the user secret key without storing the secret keys even once in a zone that is accessible to a privileged user and while keeping the secret keys confidential in the communication path. Other problems, configurations, and effects than those described above will become apparent in the descriptions of embodiments below.

BRIEF DESCRIPTION OF THE DRAWINGS

The present invention can be appreciated by the description which follows in conjunction with the following figures, wherein:

FIG. 1 is a diagram for illustrating a configuration example of a computer system according to a first embodiment;
FIG. 2 is a diagram for illustrating an example of a hardware configuration of a client terminal in the first embodiment;
FIG. 3 is a diagram for illustrating an example of a hardware configuration of a data management server in the first embodiment;
FIG. 4 is a diagram for illustrating an example of a functional configuration of the client terminal(U) in the first embodiment;
FIG. 5 is a diagram for illustrating an example of a functional configuration of the client terminal(KM) in the first embodiment;
FIG. 6 is a diagram for illustrating an example of a functional configuration of the data management server in the first embodiment;
FIG. 7 is a sequence for illustrating a procedure for registering a master secret key in the computer system of the first embodiment;
FIG. 8 is a sequence for illustrating an example of a procedure for issuing a user secret key by a TEE trust zone processing module in the computer system of the first embodiment;
FIG. 9 is a sequence for illustrating an example of a procedure for issuing a user secret key by the client terminal(KM) in the computer system of the first embodiment;
FIG. 10, FIG. 11, FIG. 12A, and FIG. 12B are sequence diagrams for illustrating an example of a procedure for issuing a user secret key by the client terminal(U) in the computer system of the first embodiment;
FIG. 13A and FIG. 13B are diagrams for illustrating an example of login control of a general user in the computer system of the first embodiment;
FIG. 14A and FIG. 14B are diagrams for illustrating an example of login control of a general user in the computer system of a second embodiment;
FIG. 15 is a sequence diagram for illustrating an example of a procedure for issuing a user secret key by the client terminal(U) in the computer system of the second embodiment;
FIG. 16A and FIG. 16B are diagrams for illustrating an example of login control of a general user in the computer system of a third embodiment; and
FIG. 17A and FIG. 17B are sequence diagrams for illustrating an example of a procedure for issuing a user secret key of the client terminal(U) during login from the second and subsequent times in the computer system of the third embodiment.

DETAILED DESCRIPTION OF THE PREFERRED EMBODIMENTS

Now, description is given of at least one embodiment of this invention referring to the drawings. It should be noted that this invention is not to be construed by limiting the invention to the content described in the following at least one embodiment. A person skilled in the art would easily recognize that specific configurations described in the following at least one embodiment may be changed within the scope of the concept and the gist of this invention.

In configurations of the at least one embodiment of this invention described below, the same or similar components or functions are denoted by the same reference numerals, and a redundant description thereof is omitted here.

Notations of, for example, "first", "second", and "third" herein are assigned to distinguish between components, and do not necessarily limit the number or order of those components.

[First Embodiment]

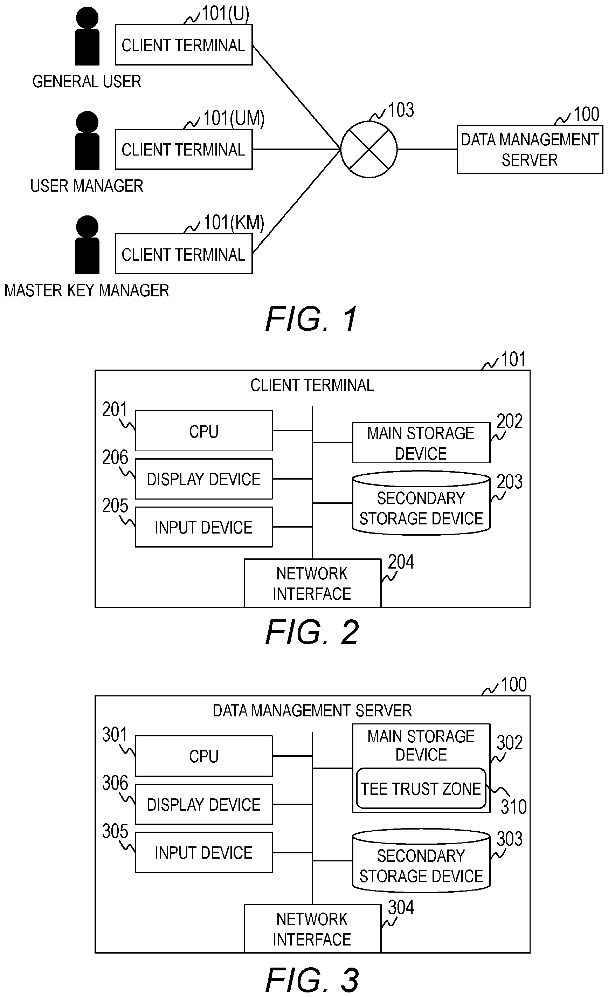

Description is now given of a configuration of a computer system according to a first embodiment of this invention with reference to FIG. 1 to FIG. 6.

FIG. 1 is a diagram for illustrating a configuration example of a computer system according to the first embodiment.

The computer system of the first embodiment includes a data management server 100 and a plurality of client terminals 101. The data management server 100 is communicably coupled to each client terminal 101 via a network 103. The network 103 is, for example, a wide area network (WAN), a local area network (LAN), or the like. The method of coupling to the network 103 may be any one of a wired manner or a wireless manner.

In the computer system, there are a master secret key manager, a user manager, and a general user, and there are client terminals 101 operated by each of the master secret key manager, the user manager, and the general user. In the following description, the client terminal 101 used by the master secret key manager is referred to as "client terminal 101 (KM)", the client terminal 101 used by the user manager is referred to as "client terminal 101 (UM)", and the client terminal 101 used by the general user is referred to as "client terminal 101(U)". When the client terminal 101(KM), the client terminal 101(UM), and the client terminal 101(U) are not distinguished, those client terminals are hereinafter referred to as "client terminals 101."

The client terminal 101(KM) generates and manages a master secret key. Specifically, the client terminal 101(KM) generates a master secret key, encrypts the generated master secret key in accordance with a public key encryption method, and registers the encrypted master secret key in the data management server 100. Further, the client terminal 101(KM) generates a user secret key, generates a difference key mask between the master secret key and the user secret key, and registers key management data including the difference mask in the data management server 100.

The client terminal 101(UM) checks and registers application information on the general user. Specifically, the client terminal 101(UM) checks and approves application information on the general user, encrypts the application information on the general user in accordance with a probabilistic encryption method, and registers the encrypted application information in the data management server 100. The encryption performed by the client terminal 101(UM) generates data that is searchable without decryption (searchable encryption).

The probabilistic encryption method is an encryption algorithm which generates, from plaintext data, random encrypted data in which equivalence relationships and magnitude relationships are kept confidential. In the probabilistic encryption method, plaintext and ciphertext have a one-to-many correspondence.

The client terminal 101(U) generates and manages the user secret key of the general user. Specifically, the client terminal 101(U) executes user authentication processing together with the data management server 100, and shares the user secret key between the data management server 100 and the client terminal 101(U) in accordance with a Diffie-Hellman key exchange protocol (DH protocol).

The DH protocol can share the common key with a reduced communication security risk by transmitting and receiving a publicly available parameter between terminals via a communication path. The client terminals 101 in this embodiment have all required functionality for any suitable authenticated DH protocol. The type of DH key exchange to be used is ephemeral DH (DHE) or ephemeral ECDH (ECDHE), which are listed in the e-government recommended cipher list. DHE and ECDHE have a perfect forward secrecy (PFS) feature (data confidentiality is protected in the future), and are preferred to static DH from a security viewpoint.

The data management server 100 authenticates the client terminals 101, shares the user secret key used by the client terminal 101(U) based on the DH protocol, and manages information relating to the user secret key. Specifically, the data management server 100 executes processing to authenticate the general user operating the client terminal 101(U), and shares the user secret key between the data management server 100 and the client terminal 101(U) in accordance with the DH protocol. Further, the data management server 100 generates and manages information relating to the user secret key of the client terminal 101(U).

FIG. 2 is a diagram for illustrating an example of a hardware configuration of the client terminal 101 in the first embodiment.

Each client terminal 101 is an information processing device such as a personal computer, a smartphone, or a server device, and includes a CPU 201, a main storage device 202, a secondary storage device 203, a network interface 204, an input device 205, and a display device 206. The main storage device 202 is, for example, a dynamic random access memory (DRAM), and the secondary storage device 203 is a hard disk drive (HDD), a solid state drive (SSD), or the like. The input device 205 is, for example, a keyboard, a mouse, a touch panel, or the like.

The client terminals 101 may be implemented as a virtual computer.

FIG. 3 is a diagram for illustrating an example of a hardware configuration of the data management server 100 in the first embodiment.

Each data management server 100 is an information processing device such as a personal computer, a smartphone, or a server device, and includes a CPU 301, a main storage device 302, a secondary storage device 303, a network interface 304, an input device 305, and a display device 306. The main storage device 302 is, for example, a DRAM, and the secondary storage device 303 is an HDD, an SSD, or the like. The input device 305 is, for example, a keyboard, a mouse, a touch panel, or the like.

The CPU 301 included in the data management server 100 is a CPU having a TEE function, and can generate a TEE trust zone 310 on a storage area of the main storage device 302. The CPU 301 may be a CPU equipped with Intel Software Guard Extensions (SGX) (Intel is a trademark; hereinafter the same).

The TEE trust zone 310 is a hardware zone in which information is not readable even when manager authority of the computer is taken over. As described later, by generating the secret keys using the TEE trust zone 310, the key can be managed securely even when an external server is used.

The data management server 100 may be implemented as a virtual computer. Further, the data management server 100 may be implemented as a data management system composed of a plurality of pieces of data.

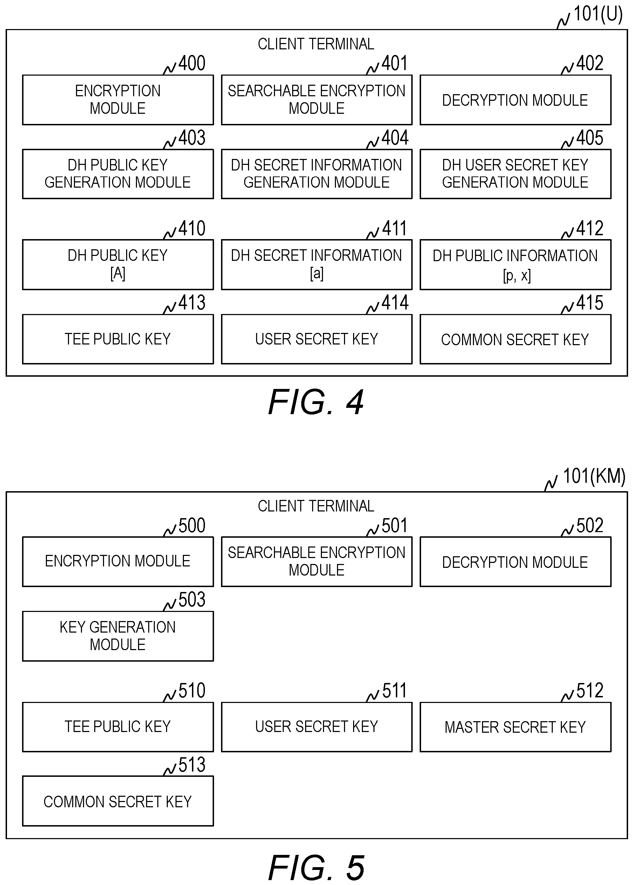

FIG. 4 is a diagram for illustrating an example of a functional configuration of the client terminal 101(U) in the first embodiment. The functional configuration of the client terminal 101(UM) is the same as that of the client terminal 101(U), and thus description thereof is omitted here.

The functional configuration of the client terminal 101(U) includes an encryption module 400, a searchable encryption module 401, a decryption module 402, a DH public key generation module 403, a DH secret information generation module 404, and a DH user secret key generation module 405. Each functional module is implemented by the CPU 201 executing a program stored in the main storage device 202. Further, the client terminal 101(U) holds a DH public key 410, DH secret information 411, DH public information 412, a TEE public key 413, a user secret key 414, and a common secret key 415.

The DH secret information 411 is a natural number used in the DH protocol. The DH secret information 411 is generated for each user who uses the client terminal 101, and each piece of DH secret information 411 is different. The DH secret information 411 is generated by the client terminal 101(U), and managed so as not to be known to a third party.

The DH public information 412 is a set of a base number and a prime number used in the DH protocol. A method of selecting an appropriate base number and prime number has been suggested by the Internet Engineering Task Force (IETF), which is a voluntary organization that promotes the standardization of Internet technology. In this embodiment, it is assumed that the data management server 100 generates the DH public information 412, but the DH public information 412 may be generated by the client terminal 101(U) to be transmitted to the data management server 100.

The DH public key 410 is a public key used in the DH protocol, and is generated from the DH public information 412 and the DH secret information 411. The client terminal 101(U) shares the DH public key 410 with the data management server 100, which is the party to which the key is to be exchanged. As described later, the data management server 100 uses the DH public key 410 to generate the user secret key.

The TEE public key 413 is a key generated by the data management server 100, and is shared between the client terminal 101(U) and the data management server 100. The TEE public key 413 is used to encrypt a user ID and password transmitted to the data management server 100.

The user secret key 414 is a secret key set for the user who uses the client terminal 101(U). The user secret key 414 is used in searchable encryption and decryption thereof. In the case of a general user, the user secret key 414 is generated based on the DH protocol. The user secret key 414 is a secret key that can be added to, deleted, and updated. The user secret key 414 is a secret key assigned to a user, and thus the client terminal 101 holds as many user secret keys 414 as the number of users who use the client terminal 101. Further, the user secret key 414 has a different value from those of other user secret keys 414. Description of the user secret key 414 is given in JP 2018-97034 A, and thus a detailed description thereof is omitted here.

The common secret key 415 is a secret key used in encryption processing and decryption processing, and is shared between the client terminal 101(U) and the data management server 100. In this embodiment, the client terminal 101(U) holds one common secret key 415, and the held common secret key 415 is not updated. In this embodiment, the common secret key 415 is generated by the data management server 100, then searchable encrypted, and transmitted to the client terminal 101(U). Description of the common secret key is given in JP 2018-97034 A, and thus a detailed description thereof is omitted here.

The encryption module 400 encrypts data by using a basic encryption technology such as the Advanced Encryption Standard (AES).

The searchable encryption module 401 performs "searchable encryption" which allows data to be searched while still encrypted. Specifically, the searchable encryption module 401 performs encryption by using a probabilistic encryption method which uses a mask having a hash value and an output value of a homomorphic function, and generates searchable encrypted data (confidential data). A method of generating searchable encrypted data is disclosed in, for example, JP 2012-123614 A.

The decryption module 402 decrypts the encrypted processing result, for example, received from the data management server 100. The DH public key generation module 403 generates the DH public key 410 based on the DH protocol. The DH secret information generation module 404 generates the DH secret information 411. The DH user secret key generation module 405 generates the user secret key 414 based on the DH protocol.

FIG. 5 is a diagram for illustrating an example of a functional configuration of the client terminal 101(KM) in the first embodiment.

The functional configuration of the client terminal 101(KM) includes an encryption module 500, a searchable encryption module 501, a decryption module 502, and a key generation module 503. Each functional module is implemented by the CPU 201 executing a program stored in the main storage device 202. Further, the client terminal 101(KM) holds a TEE public key 510, a user secret key 511, a master secret key 512, and a common secret key 513.

The TEE public key 510 is a key generated by the data management server 100, and is shared between the client terminal 101(KM) and the data management server 100. The TEE public key 510 is used to encrypt the master secret key 512 transmitted to the data management server 100.

The user secret key 511 is a secret key set for the user who uses the client terminal 101(KM). The user secret key 511 is a secret key having the same properties as those of the user secret key 414.

The master secret key 512 is a secret key used in the encryption processing for generating the searchable encrypted data. The master secret key 512 has a value different from that of the user secret key 511. In this embodiment, the master secret key 512 can be handled only by the master secret key manager and a TEE trust zone processing module 600 of the data management server 100. Description of the master secret key is given in JP 2018-97034 A, and thus a detailed description thereof is omitted here.

The common secret key 513 is the same as the common secret key 415. The client terminal 101(KM) in this embodiment holds one common secret key 513.

The encryption module 500 encrypts the data by using a basic encryption technology such as AES. The searchable encryption module 501 searchable encrypts the data. The decryption module 502 decrypts the encrypted processing result, for example, received from the data management server 100. The key generation module 503 generates various types of secret keys based on a standard key generation algorithm. The key generation module 503 in this embodiment generates the user secret key 511 and the master secret key 512.

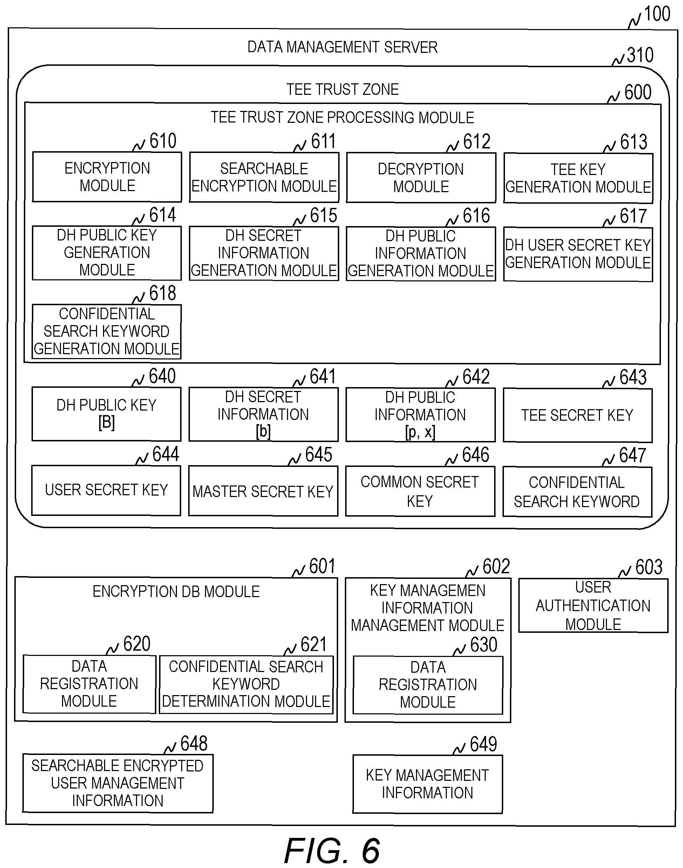

FIG. 6 is a diagram for illustrating an example of a functional configuration of the data management server 100 in the first embodiment.

The functional configuration of the data management server 100 includes the TEE trust zone processing module 600, an encryption DB module 601, a key management information management module 602, and a user authentication module 603. Each functional module is implemented by the CPU 301 executing a program stored in the main storage device 302.

The data management server 100 holds a DH public key 640, DH secret information 641, DH public information 642, a TEE secret key 643, a user secret key 644, a master secret key 645, a common secret key 646, and a confidential search keyword 647 in the TEE trust zone 310. Further, the data management server 100 holds searchable encrypted user management information 648 and key management information 649 in a zone other than the TEE trust zone 310. In addition, the data management server 100 holds a database storing the confidential data generated by using the master secret key 645 in a zone other than the TEE trust zone 310. Description of this database is omitted here because the database is not directly related to this invention.

The TEE trust zone processing module 600 operates in the TEE trust zone 310, in which information is not readable by a server manager who has manager authority of the server OS or by a cyber attacker who has taken over the manager authority through a cyber attack. In other words, the TEE trust zone processing module 600 can execute plaintext processing of confidential information and various types of key information while maintaining confidentiality from the server manager and cyber attackers.

The TEE trust zone processing module 600 includes an encryption module 610, a searchable encryption module 611, a decryption module 612, a TEE key generation module 613, a DH public key generation module 614, a DH secret information generation module 615, a DH public information generation module 616, a DH user secret key generation module 617, and a confidential search keyword generation module 618. Further, the TEE trust zone processing module 600 manages the DH public key 640, the DH secret information 641, the DH public information 642, the TEE secret key 643, the user secret key 644, the master secret key 645, the common secret key 646, and the confidential search keyword 647.

The DH secret information 641 is a natural number used in the DH protocol. The DH secret information 641 is managed so as not to be known to a third party. The DH public information 642 is a set of a base number and a prime number used in the DH protocol. The DH public information 642 is the same as the DH public information 412. The DH public key 640 is a public key used in the DH protocol, and is generated from the DH public information 642 and the DH secret information 641. The TEE trust zone processing module 600 shares the DH public key 640 with the client terminal 101(U), which is the party to which the key is to be exchanged.

The TEE secret key 643 is a pair of the TEE public keys 413 and 510 which is usable only in the TEE trust zone 310. The user secret key 644 is a secret key which is usable only in the TEE trust zone 310. The user secret key 644 is a secret key having the same properties as those of the user secret key 414. The master secret key 645 is the same key as the master secret key 512. The common secret key 646 is the same key as the common secret keys 415 and 513.

The confidential search keyword 647 is data obtained by encrypting a search keyword (plaintext data) in accordance with a probabilistic encryption method using the common secret key 646 and the user secret key 644. Description of the confidential search keyword is given in JP 2018-97034 A, and thus a detailed description thereof is omitted here.

The encryption module 610 encrypts the data by using a basic encryption technology such as AES. The searchable encryption module 611 searchable encrypts the data. The decryption module 612 decrypts the encrypted processing result, for example, received from the client terminal. The TEE key generation module 613 generates a key pair of the TEE secret key 643 and the TEE public keys 413 and 510.

The DH public key generation module 614 generates the DH public key 640 based on the DH protocol. The DH secret information generation module 615 generates the DH secret information 641. Different DH secret information 641 is generated for each client terminal 101. The DH user secret key generation module 617 generates the user secret key 414 based on the DH protocol.

The confidential search keyword generation module 618 searchable encrypts the user ID and password by using the user secret key 644 to generate a confidential search keyword that can be confidentially searched.

The encryption DB module 601 includes a data registration module 620 and a confidential search keyword determination module 621. Further, the encryption DB module 601 manages the searchable encrypted user management information 648.

The searchable encrypted user management information 648 stores records including the searchable encrypted user ID and information that can confirm the identity of the user. One record corresponds to one user.

The data registration module 620 registers data in the searchable encrypted user management information 648. The confidential search keyword determination module 621 searches for searchable encrypted data corresponding to the confidential search keyword from the searchable encrypted user management information 648.

The key management information management module 602 includes a data registration module 630, and manages the key management information 649.

The key management information 649 stores information relating to the user secret keys managed by each client terminal 101 and the TEE trust zone processing module 600. Specifically, the key management information 649 stores records including a user ID, a difference key mask, a search key, and a key version. One record corresponds to one user.

The user ID is identification information for uniquely identifying the user. The difference key mask is generated from the user secret key and the master secret key 645. The search key is a key included in the user secret key. The key version is the version of the user secret key. The key version is used as key comparison information for determining whether or not the user secret key is valid. Description of the difference key mask and the key version is given in JP 2018-97034 A, and thus a detailed description thereof is omitted here.

The data registration module 630 registers data in the key management information 649.

The user authentication module 603 executes processing of authenticating the user. For example, the user authentication module 603 executes the authentication processing based on the user ID and password, or by using a biometric authentication method. In this embodiment, multi-factor authentication is preferred from a security viewpoint. However, in this invention, the authentication processing is not limited.

Description is now given of processing executed by the computer system of the first embodiment.

In this embodiment, information that only the general user can know, for example, a security question, is registered in advance. Further, in order to issue the user secret key only to the correct user, in a case where the user secret key for the general user is issued, the user manager checks the application details of the general user.

The computer system of the first embodiment enables individual keys to be distributed to many general users while maintaining security. This invention is expected to be used in tasks in which general users are managed by a user manager and security is required to be maintained at a high level. For example, this invention may be applied to a system in which encrypted files are shared within an organization. The general users are assumed to be an employee, and the user manager is assumed to be a person in the human resources/general affairs department.

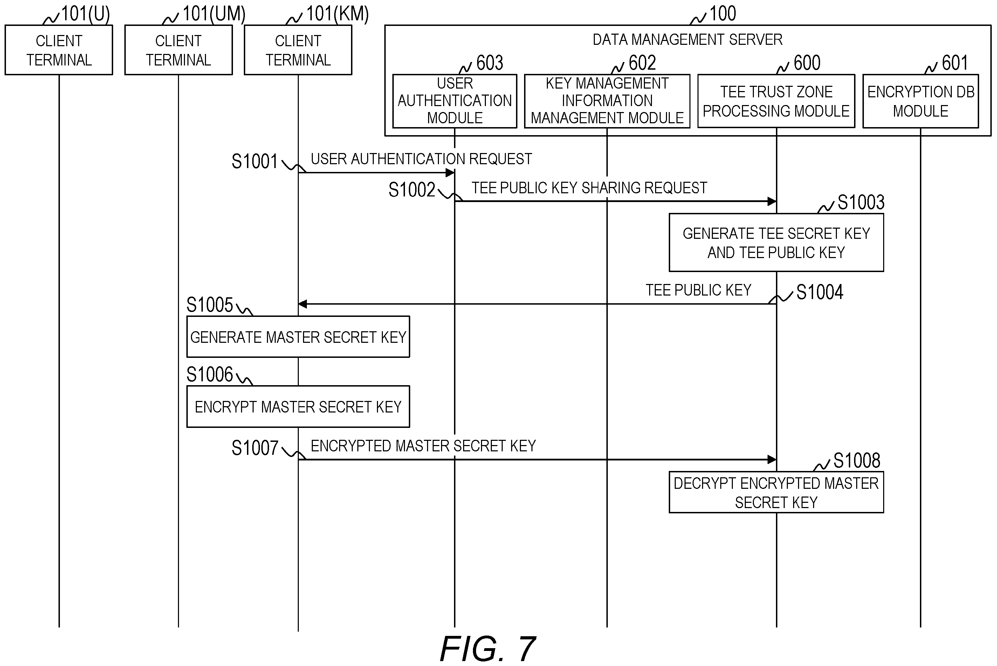

FIG. 7 is a sequence for illustrating a procedure for registering a master secret key in the computer system of the first embodiment. Here, description is given of a case in which the client terminal 101(KM) performs the processing as an example.

The client terminal 101(KM) transmits a user authentication request including a login ID distributed in advance by the server manager and a password set by the master secret key manager to the user authentication module 603 of the data management server 100 (Step S1001).

The user authentication module 603 performs user authentication by using the login ID and password. In a case where the user authentication is successful, the user authentication module 603 transmits to the TEE trust zone processing module 600 a TEE public key sharing request to the client terminal 101(KM) (Step S1002).

In a case where the TEE trust zone processing module 600 receives the request to share the TEE public key, the TEE key generation module 613 generates the TEE public key 510 and the TEE secret key 643 used to encrypt the master secret key 512 (Step S1003).

The TEE trust zone processing module 600 transmits the TEE public key 510 to the client terminal 101(KM) (Step S1004).

The key generation module 503 of the client terminal 101(KM) generates the master secret key 512 based on a standard key generation algorithm (Step S1005). Description of the processing of generating the master secret key is given in JP 2018-97034 A, and thus a detailed description thereof is omitted here.

The encryption module 500 of the client terminal 101(KM) encrypts the master secret key 512 by using the TEE public key 510 to generate an encrypted master secret key (Step S1006).

The client terminal 101(KM) transmits the encrypted master secret key to the TEE trust zone processing module 600 of the data management server 100 (Step S1007).

The decryption module 612 of the TEE trust zone processing module 600 decrypts the received encrypted master secret key by using the TEE secret key 643, and stores the decrypted master secret key in the TEE trust zone 310 (Step S1008).

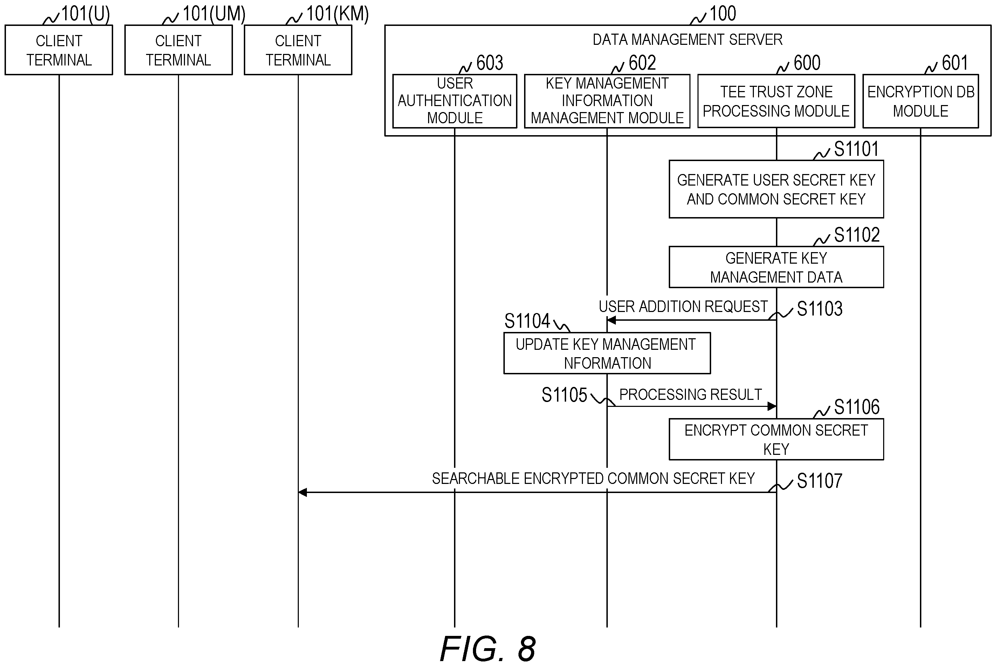

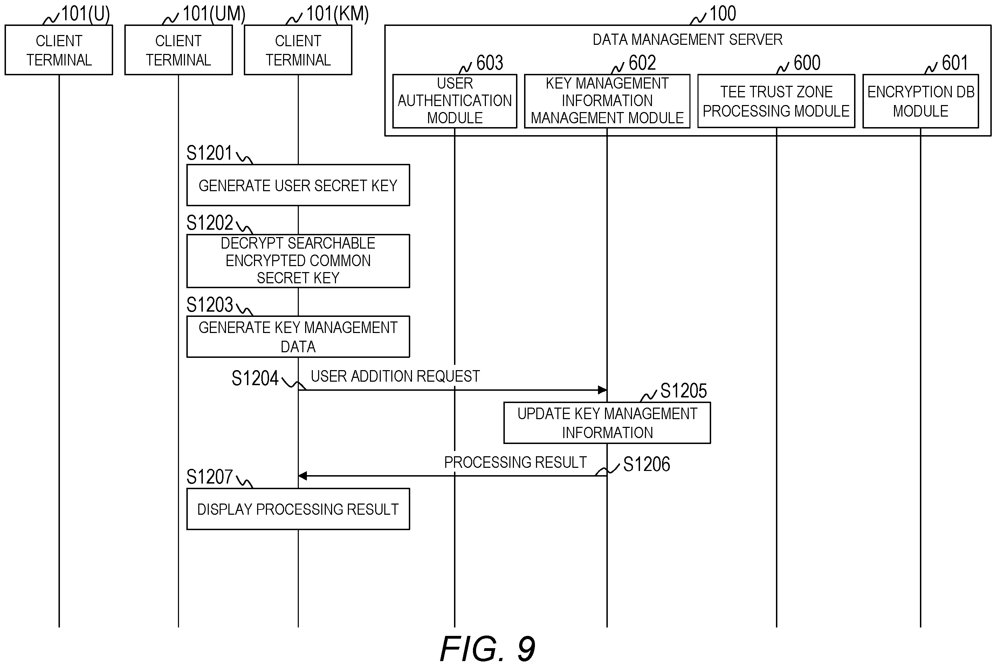

FIG. 8 is a sequence for illustrating an example of a procedure for issuing a user secret key by the TEE trust zone processing module 600 in the computer system of the first embodiment. FIG. 9 is a sequence for illustrating an example of a procedure for issuing a user secret key by the client terminal 101(KM) in the computer system of the first embodiment.

The DH user secret key generation module 617 of the TEE trust zone processing module 600 generates the user secret key 644 and the common secret key 646 based on a standard key generation algorithm (Step S1101). Description of the processing of generating the user secret key and the common secret key is given in JP 2018-97034 A, and thus a detailed description thereof is omitted here.

The TEE trust zone processing module 600 generates key management data (Step S1102). Specifically, the TEE trust zone processing module 600 executes key version generation processing, executes difference key mask generation processing by using the user secret key 644 and the master secret key 645, and generates key management data including the user ID, the key version, the difference key mask, and the search key. Description of the key version generation processing and the difference mask generation processing is given in JP 2018-97034 A, and thus a detailed description thereof is omitted here.

The TEE trust zone processing module 600 transmits a user addition request including the key management data to the key management information management module 602 (Step S1103).

In a case where the key management information management module 602 receives the user addition request, the key management information management module 602 updates the key management information 649 (Step S1104). Specifically, the key management information management module 602 adds a record to the key management information 649, and sets the user ID, difference key mask, search key, and key version included in the key management data in the added record.

The key management information management module 602 transmits a processing result including a value indicating the success or failure of the update processing of the key management information 649 to the TEE trust zone processing module 600 (Step S1105).

The searchable encryption module 611 of the TEE trust zone processing module generates a searchable encrypted common secret key by performing searchable encryption on the common secret key (Step S1106), and transmits the generated searchable encrypted common secret key to the client terminal 101(KM) (Step S1107).

In a case where the user authentication processing is complete and the searchable encrypted common secret key has been received, the client terminal 101(KM) issues the user secret key 511 based on the following procedure.

The key generation module 503 of the client terminal 101(KM) generates the user secret key 511 based on a standard key generation algorithm (Step S1201).

The decryption module 502 of the client terminal 101(KM) decrypts the searchable encrypted common secret key by using the generated user secret key 511 (Step S1202).

The client terminal 101(KM) generates key management data including, for example, the user ID, the key version, the difference key mask, and the search key (Step S1203).

The client terminal 101(KM) transmits a user addition request including the key management data to the key management information management module 602 of the data management server 100 (Step S1204).

In a case where the key management information management module 602 receives the user addition request, the key management information management module 602 updates the key management information 649 (Step S1205). The processing step of Step S1205 is the same as the processing step of Step S1104.

The key management information management module 602 transmits a processing result including a value indicating the success or failure of the update processing of the key management information 649 to the client terminal 101(KM) (Step S1206).

The client terminal 101(KM) displays the processing result to the master secret key manager by using the display device 206 (Step S1207).

As described with reference to in FIG. 7 to FIG. 9, in this embodiment, the TEE trust zone processing module 600 generates the TEE public key 510 and the TEE secret key 643 within the TEE trust zone 310, and stores the master secret key 645 in the TEE trust zone 310 which remains confidential from the encryption DB module 601, for example.

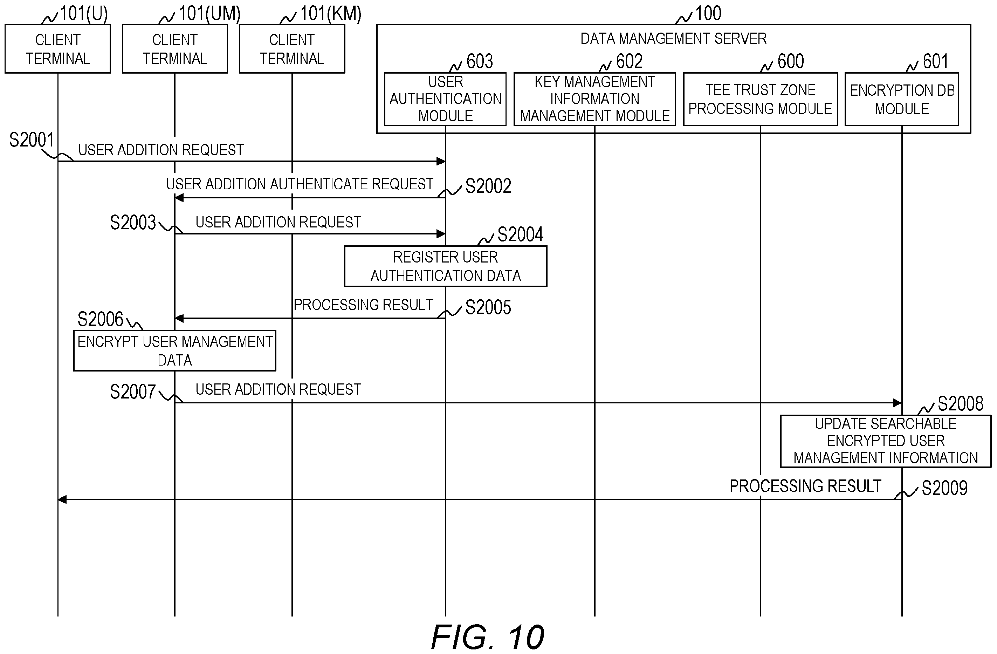

FIG. 10, FIG. 11, FIG. 12A, and FIG. 12B are sequence diagrams for illustrating an example of a procedure for issuing a user secret key by the client terminal 101(U) in the computer system of the first embodiment.

In the following description, it is assumed that the processing steps of FIG. 7 to FIG. 9 have already been executed. Specifically, it is assumed that the client terminal 101(KM) is managing the master secret key 512 and the user secret key 511, the TEE trust zone processing module 600 is managing the master secret key 645, and the key management information management module 602 is managing the key management data of the master secret key manager. Further, it is assumed that the client terminal 101(UM) is also managing the user secret key. The user secret key of the user manager can be issued based on the same procedure as the processing procedure described below.

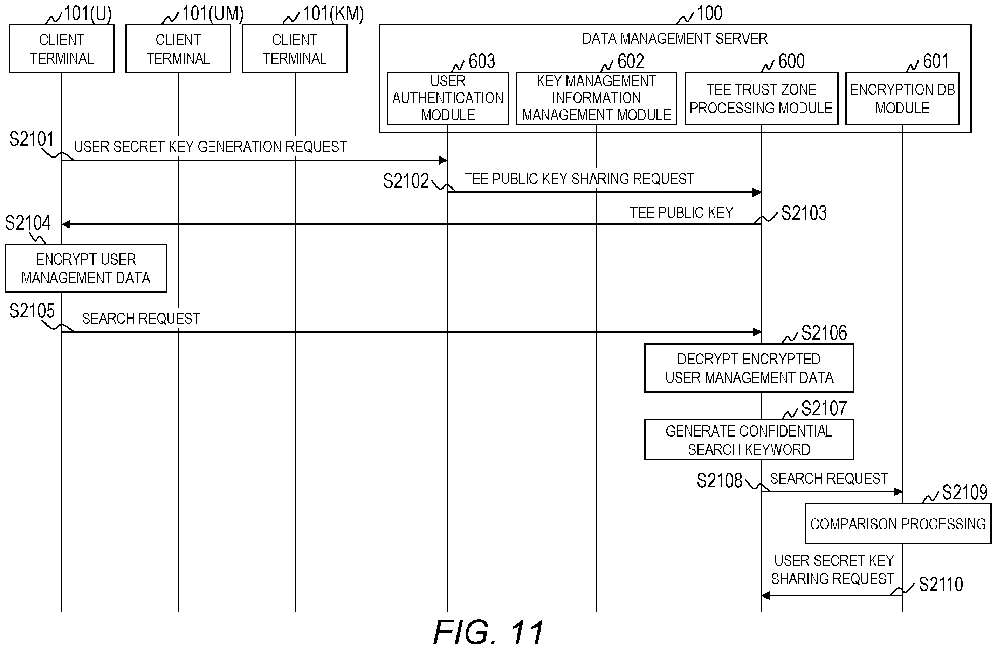

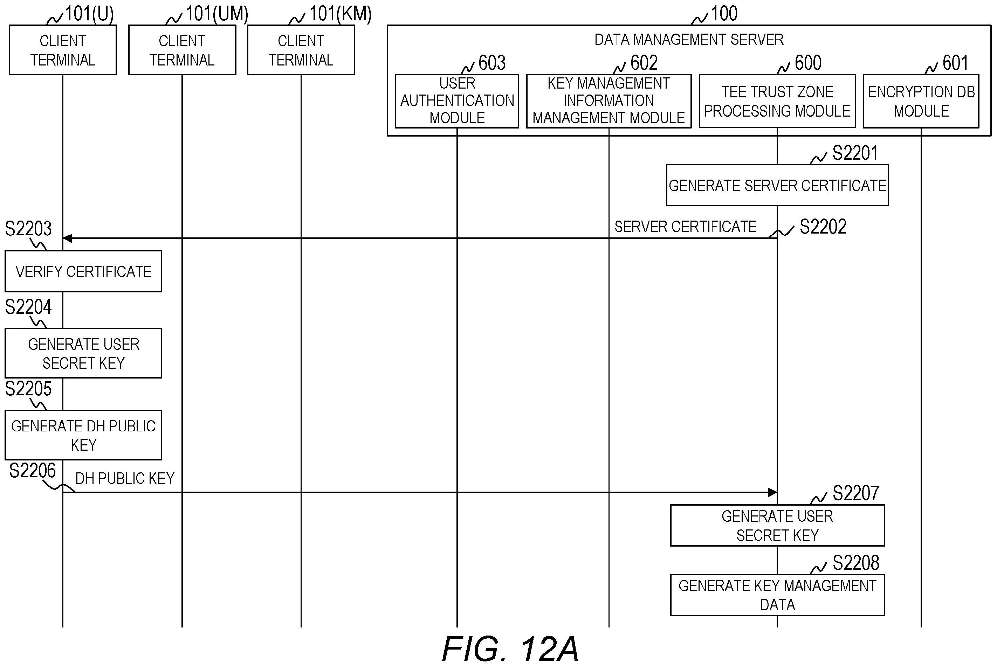

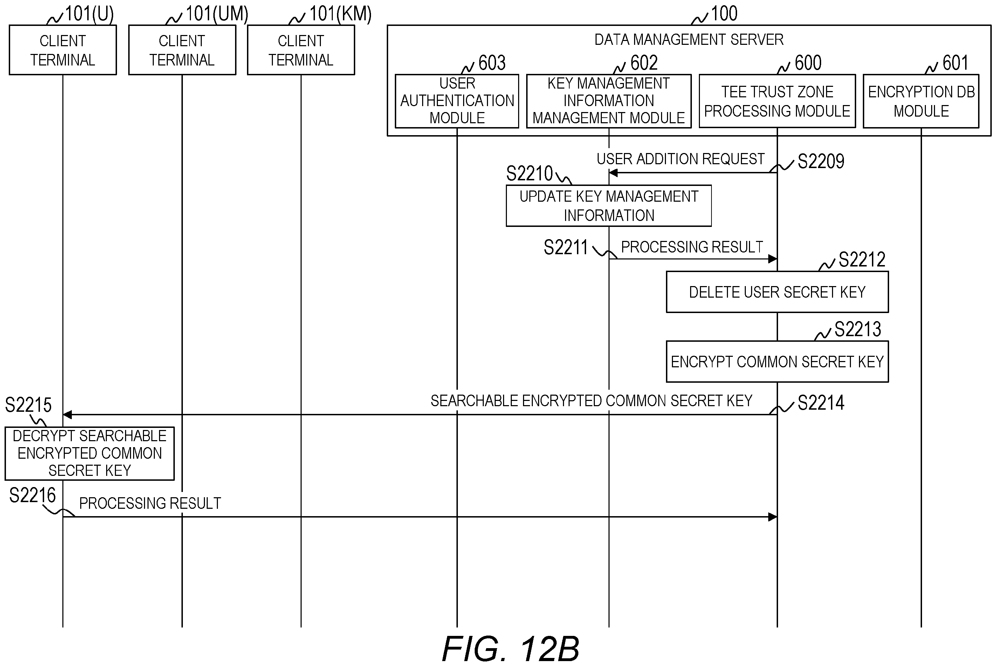

In the computer system of the first embodiment, first, a general user is registered as illustrated in FIG. 10, and then processing to check whether or not the general user is being impersonated is executed as illustrated in FIG. 11. In a case where the general user is a valid user, processing of issuing the user secret key 414 is executed as illustrated in FIG. 12A and FIG. 12B.

The client terminal 101(U) transmits a user addition request including user authentication data, which includes a user ID and a password, and user management data, which is information that can confirm the identity of the user, to the user authentication module 603 of the data management server 100 (Step S2001). The communication between the client terminal 101(U) and the data management server 100 employs general communication encryption using SSL communication, for example. In this invention, the encryption of the communication path and the authentication processing are not limited.

In this embodiment, in order to check whether or not the general user operating the client terminal 101(U) to which the user manager has transmitted the user addition request is to be registered in the system, it is assumed that the user management data includes, for example, a full name, an email address, and a security question.

The user authentication module 603 transmits to the client terminal 101(UM) a user addition approval request (Step S2002).

After the authentication processing between the user authentication module 603 and the client terminal 101(UM) is complete, the user manager checks whether or not the general user is to be registered in the system based on the user management data received from the user authentication module 603. In a case where the general user is to be registered in the system, the client terminal 101 (UM) transmits an approval including the user ID to the user authentication module 603 (Step S2003).

During the check by the user manager, the client terminal 101(UM) does not display the password, for example, set by the general user, and only displays the information required for the confirmation of the identity of the user.

The user authentication module 603 registers the user authentication data in accordance with a common user authentication mechanism (Step S2004). Thereafter, when the general user logs in by using his or her user ID and password, the user authentication module 603 performs user authentication. After the registration of the user authentication data is complete, the user authentication module 603 transmits a processing result indicating the completion of user registration to the client terminal 101(UM) (Step S2005).

The technology for the user authentication is not limited to using an ID and a password, and may be multi-factor authentication using biometrics, for example.

When the client terminal 101(UM) receives the processing result, the searchable encryption module 401 searchable encrypts the user management data by using the user secret key issued to the user manager to generate searchable encrypted user management data (Step S2006).

The client terminal 101(UM) transmits a user addition request including the searchable encrypted user management data to the encryption DB module 601 of the data management server 100 (Step S2007).

The encryption DB module 601 updates the searchable encrypted user management information 648 (Step S2008). Specifically, the encryption DB module 601 adds a record to the searchable encrypted user management information 648, and sets the values included in the searchable encrypted user management data in the added record.

The encryption DB module 601 transmits a processing result including a value indicating the success or failure of the update processing of the searchable encrypted user management information 648 to the client terminal 101(U) (Step S2009).

After the authentication processing between the user authentication module 603 and the client terminal 101(U) is complete, the client terminal 101(U) transmits to the user authentication module 603 a user secret key generation request (Step S2101).

The user authentication module 603 transmits to the TEE trust zone processing module 600 a TEE public key sharing request to the general user (Step S2102).

In a case where the TEE trust zone processing module 600 receives the request to share the TEE public key, the TEE trust zone processing module 600 transmits the TEE public key 413 generated in the processing described with reference to FIG. 7 to the client terminal 101(U) (S2103).

In a case where the client terminal 101(U) receives the TEE public key 413, the client terminal 101(U) receives input of user management data, for example, full name and security question, from the general user. The encryption module 400 generates encrypted user management data by using the TEE public key 413 to encrypt the user management data (Step S2104).

The client terminal 101(U) transmits a search request including the encrypted user management data to the TEE trust zone processing module 600 (Step S2105).

The decryption module 612 of the TEE trust zone processing module 600 uses the TEE secret key 643 to decrypt the encrypted user management data included in the search request (Step S2106).

The TEE trust zone processing module 600 generates the confidential search keyword (confidential search user management data) by using the user secret key 644 generated in the processing described with reference to FIG. 7 (Step S2107).

The TEE trust zone processing module 600 transmits a search request including the confidential search keyword to the encryption DB module 601 (Step S2108).

In a case where the encryption DB module 601 receives the search request, the encryption DB module 601 executes comparison processing by using the confidential search keyword (Step S2109).

Description of the comparison processing using the confidential search keyword is given in JP 2018-97034 A, and thus a detailed description thereof is omitted here.

In a case where there is a record matching the confidential search keyword in the searchable encrypted user management information 648, the encryption DB module 601 transmits to the TEE trust zone processing module 600 a user secret key sharing request (Step S2110).

In a system in which a user secret key can be issued based on authentication using only an email address, there is a risk that a malicious user could obtain the user secret key and leak information.

In the computer system of the first embodiment, as described with reference to FIG. 10 and FIG. 11, the data management server 100 manages the user management data of a general user who has been approved by the user manager in a searchable encrypted state, and in a case where a request to generate a user secret key is received from the general user, performs comparison processing by using input information acquired from the general user to check whether or not the general user who has made the request is a valid user.

In the computer system of this embodiment, in a case where a request to generate the user secret key is transmitted from an attacker impersonating a general user, because information that only the general user registered by the user manager can know is required to be input, fraudulent acquisition of the user secret key can be prevented.

Searchable encrypted user management information is managed as a random number by using a probabilistic encryption method. This is due to the following issues.

For example, in the case of hashing, which is a common security method, there is an issue in that hashing has a deterministic nature in which the hash value generated when a certain value is input is always the same. A "rainbow table" is a typical attack method against hash values. This attack method involves generating a correspondence table between plaintext and hash values, searching the hash values to find the corresponding plaintext, and fraudulently acquiring the information kept confidential through hashing.

As a countermeasure against this attack, there are methods such as "salting," in which the hashing is performed by adding a character string to the data to be hashed, and "stretching," in which hashing is performed repeatedly, but those methods just make it longer to analyze the hash value, and do not in essence prevent the hash value from being analyzed. In a case where user IDs and passwords are stored on a cloud system, it is desired to use a probabilistic encryption method.

Next, the user secret key is shared between the client terminal 101(U) and the TEE trust zone processing module 600 by using the Diffie-Hellman key exchange protocol.

In a case where the TEE trust zone processing module 600 receives a request to share the user secret key, the TEE trust zone processing module 600 generates a server certificate including the DH public information 642 and the DH public key 640 (Step S2201). Specifically, the following processing is executed.

The DH public information generation module 616 generates a base number (x) and a prime number (p) to be used in the DH protocol. The security of the DH protocol is based on the fact that as the value of $p$ becomes larger, it becomes more difficult to work out the secret key.

The DH secret information generation module 615 generates a numerical value b as the DH secret information 641. The numerical value b is a random number, and a different value is used for each client terminal 101. To ensure security, the DH secret information 641 is managed as information on a secret within the TEE trust zone 310.

The DH public key generation module 614 calculates the DH public key 640 by substituting the DH secret information 641 and the DH public information 642 into the equation (1).

$$\text{DH public key } [B] = x^b \bmod p \ \dots \ (1)$$

The TEE trust zone processing module 600 generates a server certificate including the DH public information 642 and the DH public key 640.

Description has been given above of the processing step of Step S2201.

The TEE trust zone processing module 600 transmits the server certificate to the client terminal 101(U) (Step S2202).

In a case where the client terminal 101(U) receives the server certificate, the client terminal 101(U) verifies, for example, whether the electronic signature is correct and whether the reception time is within the valid period (Step S2203).

In the processing steps of from Step S2201 to Step S2103, the TEE public key 413 and TEE secret key 643 generated in the processing described with reference to FIG. 7 may be used. Specifically, the TEE trust zone processing module 600 encrypts a server certificate by using the TEE secret key 643. The client terminal 101(U) uses the TEE public key 413 to decrypt the encrypted server certificate.

The TEE secret key 643 is generated by the TEE trust zone processing module 600, and managed in the TEE trust zone 310. Therefore, it is possible to check whether or not the DH public information 642 has been transmitted from the TEE trust zone processing module 600 by encrypting the DH public information 642, for example, with the TEE secret key 643 and decrypting the DH public information 642, for example, with the TEE public key 413.

In this embodiment, a method in which the TEE trust zone processing module 600 generates the DH public information 642 and transmits the generated DH public information 642 to the client terminal 101(U) is employed, but other methods of sharing the DH public information 642 may be used. For example, a method in which the client terminal 101(U) generates the DH public information 642 and shares the generated DH public information 642 with the data management server 100 may be used. In the method of this embodiment, the data management server 100 performs the processing in order to reduce the processing load on the client terminal 101(U).

In a case where the verification is completed correctly, the client terminal 101(U) generates the user secret key 414 (Step S2204). Specifically, the following processing is executed.

The DH secret information generation module 404 of the client terminal 101(U) generates a numerical value a as the DH secret information 411. The numerical value a is a random number, and is different for each client terminal 101. The DH secret information 411 is managed as information on a secret within the client terminal 101(U).

The DH user secret key generation module 405 generates the user secret key 414 by substituting the DH secret information 411, the DH public key 640, and the DH public information 642 into the equation (2).

$$\text{User secret key}=a^B \bmod p \ldots (2)$$

Description has been given above of the processing step of Step S2204.

The client terminal 101(U) generates the DH public key 410 based on a standard DH key exchange protocol (Step S2205). Specifically, the DH public key generation module 403 calculates the DH public key 410 by substituting the DH secret information 411 and the DH public information 412 into the equation (3).

$$\text{DH public key } [A]=x^a \bmod p \ldots (3)$$

Description has been given above of the processing step of Step S2205.

The client terminal 101(U) transmits the DH public key 410 to the TEE trust zone processing module 600 (Step S2206).

In a case where the DH user secret key generation module 617 of the TEE trust zone processing module 600 receives the DH public key 410, the DH user secret key generation module 617 generates the user secret key 414 (Step S2207). Specifically, the DH user secret key generation module 617 generates the user secret key 414 by substituting the DH public key 410, the DH secret information 641, and the DH public information 642 into the equation (4).

$$\text{User secret key}=b^A \bmod p \ldots (4)$$

Next, the TEE trust zone processing module 600 generates key management data (Step S2208). Specifically, the TEE trust zone processing module 600 executes key version generation processing, executes difference key mask generation processing by using the user secret key 414 and the master secret key 645, and generates key management data including the user ID, the key version, the difference key mask, and the search key.

The TEE trust zone processing module 600 transmits a user addition request including the key management data to the key management information management module 602 (Step S2209).

In a case where the key management information management module 602 receives the user addition request, the key management information management module 602 updates the key management information 649 (Step S2210). Specifically, the key management information management module 602 adds a record to the key management information 649, and sets the user ID, difference key mask, search key, and key version included in the key management data in the added record.

The key management information management module 602 transmits a processing result including a value indicating the success or failure of the update processing of the key management information 649 to the TEE trust zone processing module 600 (Step S2211).

In a case where the TEE trust zone processing module 600 receives a processing result including a value indicating success of the TEE key management information update processing, the TEE trust zone processing module 600 deletes the user secret key 414 (Step S2212).

Due to the implementation of the TEE function, the amount of data that can be handled by the TEE trust zone 310 is small. In a case where the user secret key 414 is shared with a large number of client terminals 101(U), it is difficult to store all the user secret keys 414 in the TEE trust zone 310.

Therefore, the data management server 100 manages only the key management data, which is information relating to each user secret key 414, in a storage area other than the TEE trust zone 310, and deletes the user secret key 414 from the TEE trust zone 310. As a result, it is possible to shorten the response time of the processing result by efficiently using the TEE trust zone 310 while implementing sharing of the user secret key 414.

The searchable encryption module 611 of the TEE trust zone processing module 600 generates a searchable encrypted common secret key by performing searchable encryption on the common secret key 646 by using its own user secret key 644 (Step S2213).

The TEE trust zone processing module 600 transmits the searchable encrypted common secret key to the client terminal 101(U) (Step S2214).

The client terminal 101(U) decrypts the searchable encrypted common secret key by using the user secret key 414 (Step S2215).

The client terminal 101(U) transmits a processing result including a value indicating the success or failure of the series of processing steps to the TEE trust zone processing module 600 (Step S2216).

As described above, by, for example, decrypting the encrypted data and generating the user secret key within the TEE trust zone 310, advanced processing can be performed securely. In a case where information that is required to be kept confidential is transmitted and received to and from the TEE trust zone processing module 600 and the outside, the information is encrypted or made confidential.

In the computer system of the first embodiment, the user secret key can be shared without storing the secret keys even once in a zone of the data management server 100 that is accessible to a privileged user, and while keeping the secret keys and the user information confidential in the communication path. In other words, the computer system of the first embodiment can distribute and update the secret keys securely and conveniently on a system that provides a cloud service. As a result, the secret keys can be distributed to many users without exchanging the secret keys via email or face-to-face.

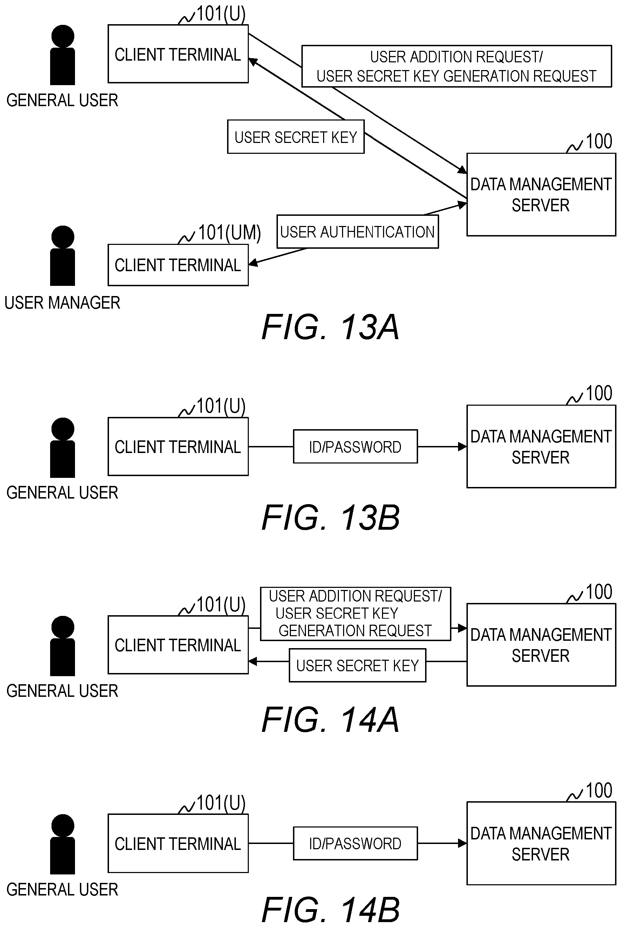

FIG. 13A and FIG. 13B are diagrams for illustrating an example of login control of a general user in the computer system of the first embodiment.

In FIG. 13A, initial login control is illustrated. It is assumed that the processing described with reference to FIG. 7 and FIG. 8 has already been executed, and that the user secret key of the user manager has already been issued. Specifically, it is assumed that the master secret key manager is managing the master secret key 512 and the user secret key 511, the user manager is managing the user secret key, the TEE trust zone processing module 600 is managing the master secret key 645, and the key management data of each key is registered in the key management information 649.

The general user operates the client terminal 101(U) and transmits a user addition request including a user ID and password to the data management server 100.

In a case where the user manager confirms, by using the user management data, that the general user is to be registered in the system, that is, in a case where the user manager approves the application, the user manager registers the user authentication data of the general user in the data management server 100 in accordance with the processing procedure described with reference to FIG. 10.

Next, the general user operates the client terminal 101(U) to perform user authentication with the data management server 100 by using the login ID and password. After the user authentication is complete, the general user operates the client terminal 101(U) and transmits to the data management server 100 a request to generate the user secret key. The processing illustrated in FIG. 11 is executed between the client terminal 101(U) and the data management server 100 in order to confirm that the general user who has transmitted the request to generate a user secret key is a legitimate general user.

After it is confirmed that the user is a legitimate general user, the data management server 100 issues the user secret key 414 for the general user.

The general user operates the client terminal 101(U) to register and search the confidential data in the data management server 100 by using the acquired user secret key 414. The general user manages the user secret key 414 so that the user secret key 414 is not leaked.

In FIG. 13B, login control from the second and subsequent times is illustrated.

The general user operates the client terminal 101(U) to perform user authentication by using the login ID and password issued at the time of the initial login.

The general user operates the client terminal 101(U) to register and search the confidential data in the data management server 100 by using the user secret key 414.

[Second Embodiment]

A second embodiment of this invention is different from the first embodiment in that the computer system does not involve a user manager. Description of the second embodiment is now given by focusing on the differences from the first embodiment.

The computer system of the second embodiment does not include the client terminal 101(UM). The hardware configuration and the software configuration of the client terminals 101 in the second embodiment are the same as those in the first embodiment. The hardware configuration and the software configuration of the data management server 100 in the second embodiment are the same as those in the first embodiment.

FIG. 14A and FIG. 14B are diagrams for illustrating an example of login control of a general user in the computer system of the second embodiment.

In FIG. 14A, initial login control is illustrated. In the second embodiment, after registering, a general user acquires the user secret key without being authenticated by a user manager. In FIG. 14B, login control from the second and subsequent times is illustrated. Login control from the second and subsequent times is the same as in the first embodiment.

In the system of the second embodiment, the client terminal 101(U) of a general user who issues a user secret key is strictly managed, and can only access sites to which a key can be issued that are limited based on IP restriction. The sites to which a key can be issued are, for example, sites to which a connection is limited based on IP address. The system of the second embodiment can be used in a system in which the general user who issues a key and the client terminal 101(U) are trusted, but the data management server 100 and the communication path are not trusted.

The processing procedure for registering the master secret key is the same as in the first embodiment (FIG. 7 to FIG. 9).

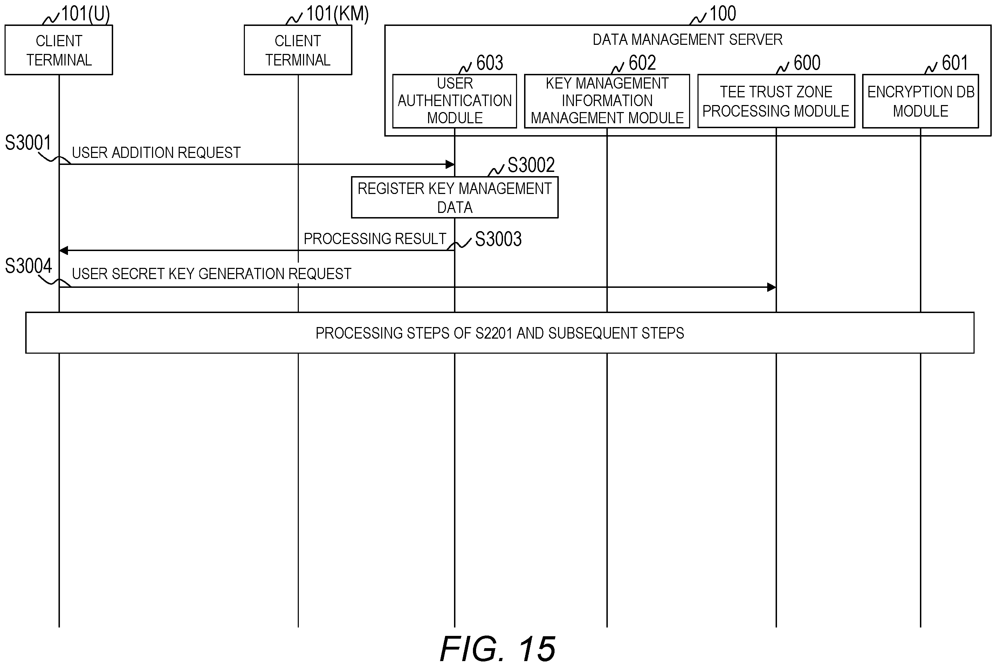

FIG. 15 is a sequence diagram for illustrating an example of a procedure for issuing a user secret key by the client terminal 101(U) in the computer system of the second embodiment.

The client terminal 101(U) transmits a user addition request including user authentication data, which includes a user ID and a password, to the user authentication module 603 of the data management server 100 (Step S3001).

The user authentication module 603 registers the user authentication data in accordance with a common user authentication mechanism (Step S3002). Thereafter, when the general user logs in by using his or her user ID and password, the user authentication module 603 performs user authentication. After the registration of the user authentication data is complete, the user authentication module 603 transmits a processing result indicating the completion of user registration to the client terminal 101(U) (Step S3003).

After the authentication processing between the user authentication module 603 and the client terminal 101(U) is complete, the client terminal 101(U) transmits to the TEE trust zone processing module 600 a user secret key generation request (Step S3004).

After that, the processing steps of Step S2201 and the subsequent steps are executed.

In the second embodiment, in addition to the effects of the first embodiment, it is possible to reduce the effort required by the user manager to approve a general user.

[Third Embodiment]

A third embodiment of this invention is different from the first embodiment in that a user secret key 414 that is valid only once, like a one-time password, is issued. Description of the third embodiment is now given by focusing on the differences from the first embodiment.

The configuration of the computer system of the third embodiment is the same as in the first embodiment. The hardware configuration and the software configuration of the client terminals 101 in the third embodiment are the same as those in the first embodiment. The hardware configuration and the software configuration of the data management server 100 in the third embodiment are the same as those in the first embodiment.

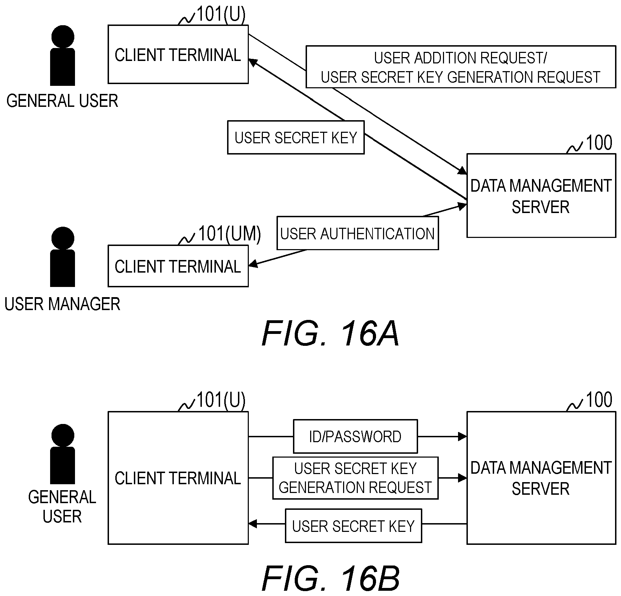

FIG. 16A and FIG. 16B are diagrams for illustrating an example of login control of a general user in the computer system of the third embodiment.

In FIG. 16A, initial login control is illustrated, and in FIG. 16B, login control from the second and subsequent times is illustrated. The initial login control is the same as in the first embodiment. Specifically, the processing steps of from FIG. 7 to FIG. 12B are executed. In the third embodiment, when a general user logs in, the client terminal 101(U) transmits to the data management server 100 a request to generate a user secret key, and acquires a new user secret key 414.

The system of the third embodiment may be used as a system in which many general users view a limited scope of confidential data, for example, as a portal site used by special retirees and their dependents that can only be used on the Internet, in which up to now key distribution and management has been an issue yet to be solved.

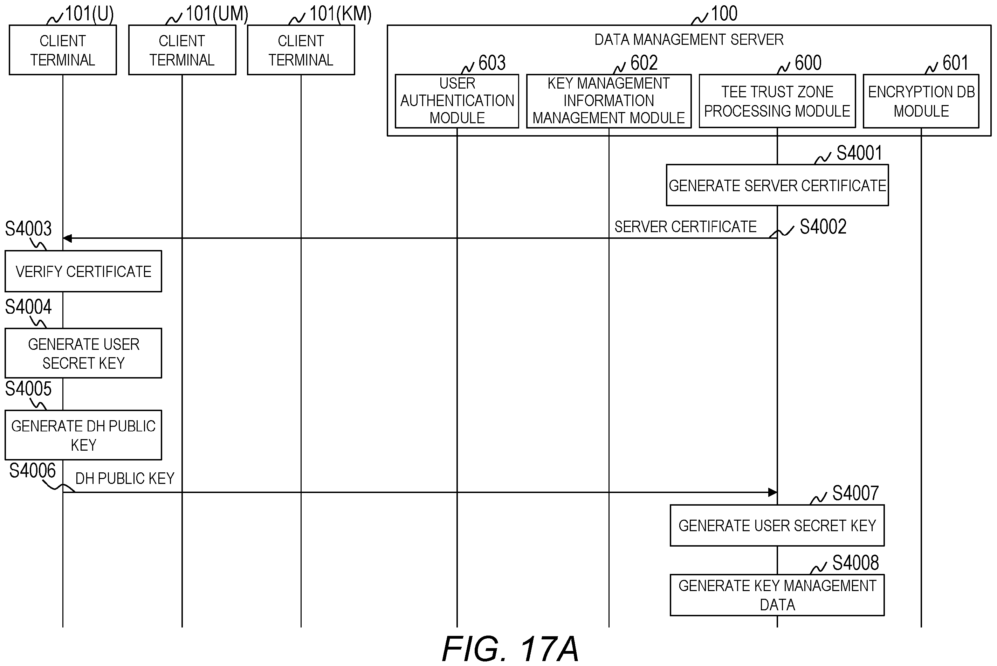

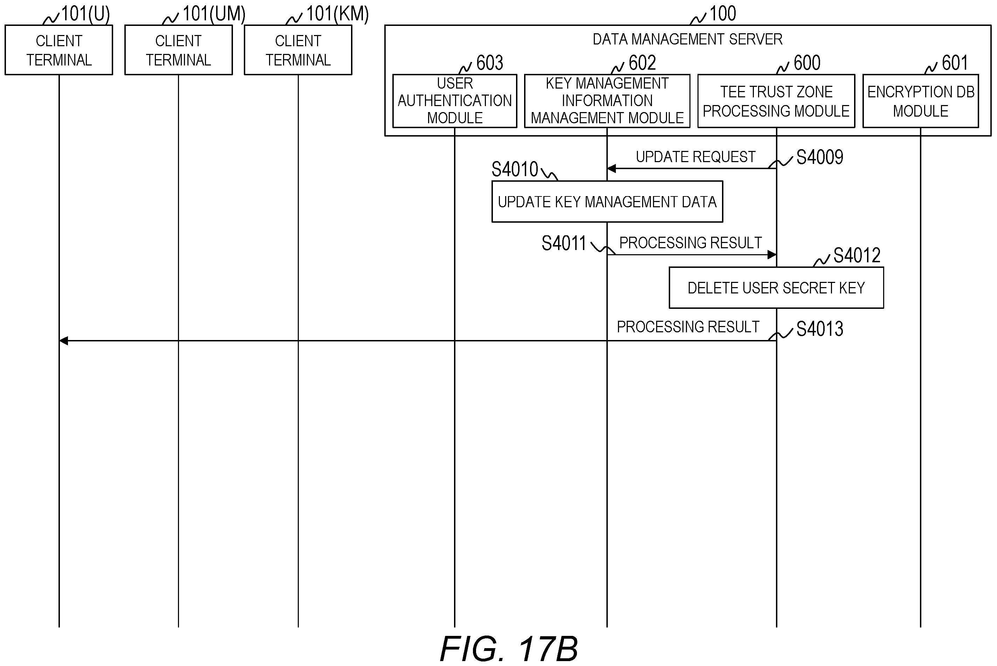

FIG. 17A and FIG. 17B are sequence diagrams for illustrating an example of a procedure for issuing a user secret key of the client terminal 101(U) during login from the second and subsequent times in the computer system of the third embodiment.

In a case where the TEE trust zone processing module 600 receives a request to share the user secret key, the TEE trust zone processing module 600 generates a server certificate including the DH public information 642 and the DH public key 640 (Step S4001). The processing step of Step S4001 is the same as the processing step of Step S2201.

The TEE trust zone processing module 600 transmits the server certificate to the client terminal 101(U) (Step S4002). The processing step of Step S4002 is the same as the processing step of Step S2202.

In a case where the client terminal 101(U) receives the server certificate, the client terminal 101(U) verifies, for example, whether the electronic signature is correct and whether the reception time is within the valid period (Step S4003). The processing step of Step S4003 is the same as the processing step of Step S2203.

In a case where the verification is completed correctly, the DH user secret key generation module 405 of the client terminal 101(U) generates the user secret key 414 (Step S4004). The processing step of Step S4004 is the same as the processing step of Step S2204.

The client terminal 101(U) generates the DH public key 410 based on a DH protocol (Step S4005). The processing step of Step S4005 is the same as the processing step of Step S2205.

The client terminal 101(U) transmits the DH public key 410 to the TEE trust zone processing module 600 (Step S4006). The processing step of Step S4006 is the same as the processing step of Step S2206.

In a case where the DH user secret key generation module 617 of the TEE trust zone processing module 600 receives the DH public key 410, the DH user secret key generation module 617 generates a new user secret key 414 (Step S4007). The processing step of Step S4007 is the same as the processing step of Step S2207.

Next, the TEE trust zone processing module 600 generates key management data (Step S4008). The processing step of Step S4008 is the same as the processing step of Step S2208.

The TEE trust zone processing module 600 transmits a request to update the user secret key including the key management data to the key management information management module 602 (Step S4009).

In a case where the key management information management module 602 receives the request to update the user secret key, the key management information management module 602 updates the key management information 649 (Step S4010). Specifically, the key management information management module 602 refers to the key management information 649, and searches for a record which matches the user ID included in the received key management data. In the retrieved record, the key management information management module 602 overwrites the difference key mask, the search key, and the key version included in the key management data.

The key management information management module 602 transmits a processing result including a value indicating the success or failure of the update processing of the key management information 649 to the TEE trust zone processing module 600 (Step S4011).

In a case where the TEE trust zone processing module 600 receives a processing result including a value indicating success of the TEE key management information update processing, the TEE trust zone processing module 600 deletes the user secret key 414 (Step S4012). The processing step of Step S4012 is the same as the processing step of Step S2212.

The TEE trust zone processing module 600 transmits a processing result including a value indicating the success or failure of the update processing of the key management information to the client terminal 101(U) (Step S4013).

The processing illustrated in FIG. 11 may be executed at the time of logging in for the second and subsequent times. It should be noted that the third embodiment may be applied to the second embodiment.

In a case where the user secret key 414 used for the encryption processing and the decryption processing is updated, only the user secret key 414 used by a specific user is updated. In other words, the common secret keys 415, 513, and 646 and the user secret key 414 of other users are not updated. Further, the confidential data generated by using the master secret key 645 is stored in the data management server 100, and thus when the user secret key 414 is updated, it is not required to update the confidential data stored in the data management server 100. Therefore, it is possible to generate a new user secret key 414 at the time of login while suppressing processing costs.

In this embodiment, the types of DH key exchange are assumed to be DHE and ECDHE. DHE and ECDHE have a perfect forward secrecy (PFS) feature. Specifically, a different unique public key and secret key are generated each session, and thus even when a user secret key used in the past is compromised, the confidential data cannot be decrypted. Therefore, in the system of the third embodiment which generates a user secret key that is valid only once (valid only for one login), it is desired to use DHE or ECDHE.

As described above, by issuing a user secret key 414 that is valid only once, it is possible to increase security strength without placing a burden on the user, for example, the burden of managing encrypted keys, which requires strict management, is reduced, and keys are prevented from becoming compromised.

The present invention is not limited to the above embodiment and includes various modification examples. In addition, for example, the configurations of the above embodiment are described in detail so as to describe the present invention comprehensibly. The present invention is not necessarily limited to the embodiment that is provided with all of the configurations described. In addition, a part of each configuration of the embodiment may be removed, substituted, or added to other configurations.

A part or the entirety of each of the above configurations, functions, processing units, processing means, and the like may be realized by hardware, such as by designing integrated circuits therefor. In addition, the present invention can be realized by program codes of software that realizes the functions of the embodiment. In this case, a storage medium on which the program codes are recorded is provided to a computer, and a CPU that the computer is provided with reads the program codes stored on the storage medium. In this case, the program codes read from the storage medium realize the functions of the above embodiment, and the program codes and the storage medium storing the program codes constitute the present invention. Examples of such a storage medium used for supplying program codes include a flexible disk, a CD-ROM, a DVD-ROM, a hard disk, a solid state drive (SSD), an optical disc, a magneto-optical disc, a CD-R, a magnetic tape, a non-volatile memory card, and a ROM.

The program codes that realize the functions written in the present embodiment can be implemented by a wide range of programming and scripting languages such as assembler, C/C++, Perl, shell scripts, PHP, Python and Java.

It may also be possible that the program codes of the software that realizes the functions of the embodiment are stored on storing means such as a hard disk or a memory of the computer or on a storage medium such as a CD-RW or a CD-R by distributing the program codes through a network and that the CPU that the computer is provided with reads and executes the program codes stored on the storing means or on the storage medium.

In the above embodiment, only control lines and information lines that are considered as necessary for description are illustrated, and all the control lines and information lines of a product are not necessarily illustrated. All of the configurations of the embodiment may be connected to each other.

**Claims**

1. A computer system, comprising:

> a data management server; and
> a client terminal,
> the data management server including an arithmetic device and a storage device,
> the data management server being configured to manage a database configured to store confidential data encrypted based on a probabilistic encryption method using a master secret key,
> the arithmetic device having a function for generating a trust zone which is secure and logically isolated in the storage device,
> the trust zone storing the master secret key as well as public information and first secret information to be used in a Diffie-Hellman key exchange protocol,
> the client terminal being configured to hold the public information and second secret information to be used in the Diffie-Hellman key exchange protocol,
> the data management server being configured to:
>
> > generate, in a case where a request to generate a user secret key to be used to access the confidential data managed by the data management server is received from the client terminal, a first public key by using the public information and the first secret information; and

transmit the first public key to the client terminal,
the client terminal being configured to:

> generate the user secret key by using the public information, the second secret information, and the first public key;
> generate a second public key by using the public information and the second secret information; and
> transmit the second public key to the data management server,
> the data management server being configured to:
>
> > store the second public key in the trust zone;
> > generate the user secret key in the trust zone by using the public information, the first secret information, and the second public key;
> > generate, in the trust zone, key management data for managing the user secret key; and
> > record the key management data as information for use in comparison processing for determining whether the user secret key is valid.

2. The computer system according to claim 1, wherein the data management server is configured to delete the user secret key from the trust zone after the key management data is recorded.

3. The computer system according to claim 1, wherein the user secret key is a key which is valid only once.

4. The computer system according to claim 1, wherein the client terminal is configured to:

> receive, from a user operating the client terminal, input of registered user management data for checking a validity of the user; and
> encrypt the registered user management data and register the encrypted registered user management data in the data management server, and
> wherein the data management server is configured to:
>
> > receive input of checked user management data in a case where a request to generate the user secret key is received; and
> > determine whether the user who has requested generation of the user secret key is a valid user based on the encrypted checked user management data and the encrypted registered user management data.

5. A key exchange method to be executed in a computer system which includes a data management server and a client terminal,

the data management server including an arithmetic device and a storage device,
the data management server being configured to manage a database configured to store confidential data encrypted based on a probabilistic encryption method using a master secret key,
the arithmetic device having a function for generating a trust zone which is secure and logically isolated in the storage device,
the trust zone storing the master secret key as well as public information and first secret information to be used in a Diffie-Hellman key exchange protocol,
the client terminal being configured to hold the public information and second secret information to be used in the Diffie-Hellman key exchange protocol,
the key exchange method including:

a first step of generating, by the data management server, in a case where a request to generate a user secret key to be used to access the confidential data managed by the data management server is received from the client terminal, a first public key by using the public information and the first secret information;
a second step of transmitting, by the data management server, the first public key to the client terminal;
a third step of generating, by the client terminal, the user secret key by using the public information, the second secret information, and the first public key;
a fourth step of generating, by the client terminal, a second public key by using the public information and the second secret information;
a fifth step of transmitting, by the client terminal, the second public key to the data management server;
a sixth step of storing, by the data management server, the second public key in the trust zone;
a seventh step of generating, by the data management server, the user secret key in the trust zone by using the public information, the first secret information, and the second public key;
an eighth step of generating, by the data management server, in the trust zone, key management data for managing the user secret key; and
a ninth step of recording, by the data management server, the key management data as information for use in comparison processing for determining whether the user secret key is valid.

6. The key exchange method according to claim 5, wherein the seventh step includes a step of deleting, by the data management server, the user secret key from the trust zone after the key management data is recorded.

7. The key exchange method according to claim 5, wherein the user secret key is a key which is valid only once.

8. The key exchange method according to claim 5, further including the steps of:

receiving, by the client terminal, from a user operating the client terminal, input of registered user management data for checking a validity of the user; and
encrypting, by the client terminal, the registered user management data and registering the encrypted registered user management data in the data management server,
wherein the first step includes the steps of:

receiving, by the data management server, input of checked user management data; and
determining, by the data management server, whether the user who has requested generation of the user secret key is a valid user based on the encrypted checked user management data and the encrypted registered user management data.

GENERAL USER — CLIENT TERMINAL ~101(U)

USER MANAGER — CLIENT TERMINAL ~101(UM)

MASTER KEY MANAGER — CLIENT TERMINAL ~101(KM)

~103

DATA MANAGEMENT SERVER ~100

*FIG. 1*

~101
CLIENT TERMINAL

201 CPU
206 DISPLAY DEVICE
205 INPUT DEVICE

202 MAIN STORAGE DEVICE
203 SECONDARY STORAGE DEVICE

204 NETWORK INTERFACE

*FIG. 2*

~100
DATA MANAGEMENT SERVER

301 CPU
306 DISPLAY DEVICE
305 INPUT DEVICE

302 MAIN STORAGE DEVICE
310 TEE TRUST ZONE
303 SECONDARY STORAGE DEVICE

304 NETWORK INTERFACE

*FIG. 3*

101(U)

CLIENT TERMINAL

| 400 | 401 | 402 |
|---|---|---|
| ENCRYPTION MODULE | SEARCHABLE ENCRYPTION MODULE | DECRYPTION MODULE |

| 403 | 404 | 405 |
|---|---|---|
| DH PUBLIC KEY GENERATION MODULE | DH SECRET INFORMATION GENERATION MODULE | DH USER SECRET KEY GENERATION MODULE |

| 410 | 411 | 412 |
|---|---|---|
| DH PUBLIC KEY [A] | DH SECRET INFORMATION [a] | DH PUBLIC INFORMATION [p, x] |

| 413 | 414 | 415 |
|---|---|---|
| TEE PUBLIC KEY | USER SECRET KEY | COMMON SECRET KEY |

## FIG. 4

101(KM)

CLIENT TERMINAL

| 500 | 501 | 502 |
|---|---|---|
| ENCRYPTION MODULE | SEARCHABLE ENCRYPTION MODULE | DECRYPTION MODULE |

| 503 | | |
|---|---|---|
| KEY GENERATION MODULE | | |

| 510 | 511 | 512 |
|---|---|---|
| TEE PUBLIC KEY | USER SECRET KEY | MASTER SECRET KEY |

| 513 | | |
|---|---|---|
| COMMON SECRET KEY | | |

## FIG. 5

FIG. 6

*FIG. 7*

FIG. 8

FIG. 9

FIG. 10

FIG. 11

```
   101(U)          101(UM)         101(KM)                                    100
 ┌──────────┐    ┌──────────┐    ┌──────────┐   DATA MANAGEMENT SERVER
 │  CLIENT  │    │  CLIENT  │    │  CLIENT  │
 │ TERMINAL │    │ TERMINAL │    │ TERMINAL │        603          602           600          601
 └──────────┘    └──────────┘    └──────────┘   ┌──────────┐ ┌──────────┐ ┌──────────┐ ┌──────────┐
                                                │   USER   │ │   KEY    │ │   TEE    │ │          │
                                                │  AUTHEN- │ │ MANAGE-  │ │  TRUST   │ │ENCRYPTION│
                                                │ TICATION │ │   MENT   │ │   ZONE   │ │DB MODULE │
                                                │  MODULE  │ │  INFO    │ │PROCESSING│ │          │
                                                │          │ │ MODULE   │ │  MODULE  │ │          │
                                                └──────────┘ └──────────┘ └──────────┘ └──────────┘
```

USER AUTHENTICATION MODULE — 603

KEY MANAGEMENT INFORMATION MANAGEMENT MODULE — 602

TEE TRUST ZONE PROCESSING MODULE — 600

ENCRYPTION DB MODULE — 601

S2201 — GENERATE SERVER CERTIFICATE

S2202 — SERVER CERTIFICATE

S2203 — VERIFY CERTIFICATE

S2204 — GENERATE USER SECRET KEY

S2205 — GENERATE DH PUBLIC KEY

S2206 — DH PUBLIC KEY

S2207 — GENERATE USER SECRET KEY

S2208 — GENERATE KEY MANAGEMENT DATA

*FIG. 12A*

FIG. 12B

EP 4 468 650 A1

CLIENT TERMINAL ~101(U)

GENERAL USER

USER ADDITION REQUEST/
USER SECRET KEY GENERATION REQUEST

USER SECRET KEY

DATA MANAGEMENT
SERVER ~100

CLIENT TERMINAL ~101(UM)

USER MANAGER

USER AUTHENTICATION

## FIG. 13A

CLIENT TERMINAL ~101(U)

GENERAL USER

ID/PASSWORD

DATA MANAGEMENT
SERVER ~100

## FIG. 13B

CLIENT TERMINAL ~101(U)

GENERAL USER

USER ADDITION REQUEST/
USER SECRET KEY
GENERATION REQUEST

USER SECRET KEY

DATA MANAGEMENT
SERVER ~100

## FIG. 14A

CLIENT TERMINAL ~101(U)

GENERAL USER

ID/PASSWORD

DATA MANAGEMENT
SERVER ~100

## FIG. 14B

FIG. 15

EP 4 468 650 A1

~101(U)

CLIENT TERMINAL

GENERAL USER

USER ADDITION REQUEST/
USER SECRET KEY GENERATION REQUEST

USER SECRET KEY

~100

DATA MANAGEMENT
SERVER

~101(UM)

CLIENT TERMINAL

USER AUTHENTICATION

USER MANAGER

*FIG. 16A*

~101(U)

~100

CLIENT TERMINAL

ID/PASSWORD

USER SECRET KEY
GENERATION REQUEST

USER SECRET KEY

DATA MANAGEMENT
SERVER

GENERAL
USER

*FIG. 16B*

FIG. 17A

EP 4 468 650 A1

FIG. 17B

EP 4 468 650 A1

# INTERNATIONAL SEARCH REPORT

| | International application No. |
|---|---|
| | **PCT/JP2022/038483** |

**A.    CLASSIFICATION OF SUBJECT MATTER**

*H04L 9/08*(2006.01)i; *H04L 9/14*(2006.01)i
FI:    H04L9/08 C; H04L9/14; H04L9/08 F

According to International Patent Classification (IPC) or to both national classification and IPC

**B.    FIELDS SEARCHED**

Minimum documentation searched (classification system followed by classification symbols)

H04L9/08; H04L9/14

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | DRUCKER, Nir. GUERON, Shay. Achieving trustworthy Homomorphic Encryption by combining it with a Trusted Execution Environment. Journal of Wireless Mobile Networks. Ubiquitous Computing, and Dependable Applications (JoWUA) [online]. March 2018, vol. 9, no. 1, pp. 86-99, [retrieved on 29 November 2022], Retrieved from the Internet: <URL: https://isyou.info/jowua/papers/jowua-v9n1-4.pdf> <DOI: 10.22667/JOWUA.2018.03.31.086> in particular, pp. 88-91 | 1, 3-5, 7-8 |
| A | | 2, 6 |
| Y | CN 113259100 A (PING AN TECHNOLOGY (SHENZHEN) CO., LTD.) 13 August 2021 (2021-08-13) paragraphs [0041]-[0042] | 1, 3-5, 7-8 |
| A | (Family: none) | 2, 6 |
| Y | JP 2018-97034 A (HITACHI LTD) 21 June 2018 (2018-06-21) paragraphs [0092]-[0096], [0142]-[0160] | 1, 3-5, 7-8 |
| A | (Family: none) | 2, 6 |

☐ Further documents are listed in the continuation of Box C.        ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 November 2022** | **13 December 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## REFERENCES CITED IN THE DESCRIPTION

**Patent documents cited in the description**

- JP 2022004881 A
- JP 2018097034 A
- JP 2012123614 A